# EUROPÄISCHE PATENTSCHRIFT

(11) **EP 3 437 848 B1**
(45) Veröffentlichungstag und Bekanntmachung des Hinweises auf die Patenterteilung: **20.03.2024**
(21) Anmeldenummer: 17184763.5
(22) Anmeldetag: 03.08.2017
(51) Int. Cl.: B30B 15/08, F15B 1/02, B30B 15/16, B30B 15/24

(54) **WERKZEUGMASCHINE**
MACHINE TOOL
MACHINE-OUTIL

(43) Veröffentlichungstag der Anmeldung: 06.02.2019
(73) Patentinhaber: Nienstedt GmbH, 45721 Haltern am See (DE)
(72) Erfinder: GRONEBERG, Jan, 10707 Berlin (DE)
(74) Vertreter: btb IP Bungartz Baltzer Partnerschaft mbB Patentanwälte

(56) Entgegenhaltungen:
- EP-A1- 2 774 750
- CA-C- 1 280 669
- CN-A- 87 100 344
- CN-A- 105 059 274
- CN-U- 204 701 740
- CN-U- 205 343 913
- DE-A1- 19 830 825
- DE-A1-102011 001 955
- JP-A- H08 215 899

## Beschreibung

Die Erfindung betrifft eine Werkzeugmaschine zum Ver- oder Bearbeiten eines Werkstücks mit zumindest einem Werkzeug mit wenigstens einer Relativbewegung zwischen dem Werkstück und dem Werkzeug nach dem Oberbegriff des Anspruchs 1.

Die Erfindung ist grundsätzlich in Verbindung mit allen Maschinen verwendbar, die während der Bearbeitung ein Werkzeug hin und her bewegen. Dies können Maschinen mit linear bewegten Bauteilen oder auch Maschinen mit rotierenden Bauteilen sein. Insbesondere können dies Werkzeugmaschinen zur spanenden Bearbeitung, zum Beispiel Drehbänke, Fräsmaschinen, Hobelbänke, Schleifmaschinen, Bohrwerke oder ähnliche Maschinen sein. Auch in Verbindung mit Spritzgussmaschinen, bei denen zum Beispiel eine Schnecke bewegt wird, ist die Erfindung anwendbar. Letztlich ist der Anwendungsbereich der Erfindung lediglich auf solche Maschinen beschränkt, die während des Betriebs ein bewegtes Bauteil aufweisen, das erfindungsgemäß genutzt werden kann.

Werkstücke können im Zusammenhang mit der Erfindung alle möglichen Formen von Werkstücken sein, sowohl Metallbauteile als auch Kunststoffbauteile oder auch Lebensmittel. Eine mögliche Anwendung der Erfindung kann zum Beispiel eine Werkzeugmaschine sein, die als Pressvorrichtung zum umformenden Pressen der genannten Werkstücke ausgebildet ist. Eine derartige Pressvorrichtung weist wenigstens eine Widerlagerfläche und zumindest einen, in einer Hubbewegung gegen die Widerlagerfläche anstellbaren Pressstempel auf.

Die EP 2 774 750 A1 beschreibt eine Pressvorrichtung, gemäss dem Oberbegriff des Anspruchs 1, bei der zur Erzeugung eines zusätzlichen Hydraulikdruckkreises eine separate, motorgetriebene Pumpe in Form eines Hydraulikmotors verwendet wird. Durch diesen Hydraulikmotor und einen mit ihm zusammenwirkenden Energiespeicher kann ein die Pressbewegung unterstützender, zusätzlicher Druck aufgebracht werden.

Eine Pressvorrichtung ist ferner aus der EP 1 988 781 A1 bekannt. Diese Pressvorrichtung wird zum Pressen von Lebensmittelformen genutzt, wobei die Anwendbarkeit der vorliegenden Erfindung nicht auf die Art und Ausgestaltung des Werkstücks beschränkt ist. Pressvorrichtungen weisen in der Regel einen oder mehrere Pressstempel auf, wobei der Pressstempel in einer Hubbewegung innerhalb eines Arbeitstaktes zunächst gegen ein Widerlager angestellt wird. Hierdurch wird das Werkstück in eine Formmulde, die im Widerlager und/oder im Pressstempel angeordnet sein kann, gepresst und geformt. Nachfolgend wird der Pressstempel wieder zurückgefahren und das geformte Werkstück entnommen.

Aus der DE 10 2011 001 955 A1 ist eine Pressvorrichtung bekannt, die Blechteile mit einem Presstempel hydraulisch umformt, wobei über eine Energieumsetzungs- und -speichervorrichtung hydraulischer Druck erzeugt und zwischengespeichert wird, um hiermit ein weiteres, in die Presse integriertes Werkzeug zum Bearbeiten des noch in der Formmulde einliegende Werkstücks hydraulisch anzutreiben.

Aus der CN 2 053 439 913 U und der CA 1 280 669 C sind weitere Pressvorrichtungen bekannt.

Oft werden, insbesondere zum Handling der nicht bearbeiteten oder fertigen Werkstücke, Greifer, Saugnäpfe, Auswerfer oder sonstige, über- oder unterdruckbetätigte Mittel zum Werkstück-Handling verwendet, die üblicherweise an einen im Bereich der Fertigungsanlage vorhandenen Druckluftkreislauf angeschlossen werden. Neben diesen Mitteln zum Werkstück-Handling können auch weitere Bauteile oder Funktionen mit Druckluft realisiert werden. In allen Fällen muss jedoch Druckluft bzw. ein Unterdruck bereitgestellt werden.

Insbesondere bei kleineren Betrieben oder Betrieben, die nur eine oder einige wenige industrielle Maschinen einsetzen, ist oft die üblicherweise bei größeren Betrieben vorhandene Infrastruktur nicht gegeben. Gerade in Verbindung mit der Bearbeitung von Werkstücken, die nicht im klassischen großindustriellen Umfeld hergestellt werden, ist eine Infrastruktur mit der Zufuhr von Pressluft nicht immer vorhanden. In diesen Fällen muss dann entweder auf die Verwendung von pneumatisch oder hydraulisch angetriebenen Komponenten verzichtet werden oder die Infrastruktur muss aufwändig nachgerüstet werden.

Aufgabe der Erfindung ist es daher, eine Werkzeugmaschine mit einer Bereitstellung eines Arbeitsdruckes zu schaffen, die über geringere Anforderungen an die gebäudeseitigen Ausstattungsmittel verfügt.

Diese Aufgabe wird durch eine Werkzeugmaschine nach Anspruch 1 gelöst.

Durch die Erfindung wird es nun möglich, dass die Werkzeugmaschine die von ihr bzw. in ihrer unmittelbaren Nähe benötigte pneumatische Infrastruktur selbst erzeugt. Zum einen benötigen einige Werkzeugmaschinen pneumatischen Druck selbst, um Funktionen auszuführen. Zum anderen kann aber auch in näherer Umgebung ein solcher Bedarf vorliegen, beispielsweise in Verbindung mit dem Herausnehmen von Werkstücken aus einer Aufnahme, in der das Werkstück bearbeitet wurde oder mit dem Umsetzen des Werkstücks von einer Bearbeitungsstation zu einer anderen bzw. zu einem Transportband. Auch das Reinigen des Bearbeitungsbereichs durch Druckluft kann zum Beispiel durch die Erfindung unabhängig von der lokalen Infrastruktur ermöglicht werden.

Grundsätzlich lässt sich eine nicht Teil der Erfindung Ausgestaltung nicht nur in Verbindung mit Werkzeugmaschinen, die ein linear bewegtes Bauteil zum Antreiben des Pumpaggregates aufweisen, verwenden, sondern auch mit rotierend angetriebenen Bauteilen. Hierzu kann dann über die üblichen Getriebe die Rotationsbewegung in eine translatorische oder auch ein rotierendes Bauteil zur Erzeugung des hydraulischen oder pneumatischen Druckes verwendet werden. In diesem Zusammenhang kann zum Beispiel eine Konstruktion verwendet werden, die einem Wankel-Motor ähnlich ist, so dass in einem Hohlzylinder der Kolben des Pumpaggregates rotierend gelagert ist.

Besonders einfach kann die Erfindung allerdings mit Werkzeugmaschinen umgesetzt werden, bei denen eine translatorische Bewegung eines Bauteils der Maschine ausgenutzt werden kann. Dies kann beispielsweise die eingangs bereits genannte Pressvorrichtung sein. Nachfolgend wird die Erfindung in Verbindung mit einer solchen Pressvorrichtung beschrieben, wobei sich die genannten Merkmale aber auch auf die anderen, oben genannten Vorrichtungen übertragen lassen. Selbst in Verbindung mit Robotern oder Logistikvorrichtungen kann die Erfindung eingesetzt werden.

Die Verbindung mit dem bewegten Bauteil kann unmittelbar oder über ein Hebelgetriebe erfolgen. Auch ein Übersetzungsgetriebe kann zwischengeschaltet werden, um zum Beispiel das Pumporgan schneller oder langsamer als das bewegte Bauteil zu bewegen. Auch kann das Bauteil selbst das Pumporgan des Pumpaggregates sein.

Die Erfindung wird genutzt um einen pneumatischen Über- oder Unterdruck bereitzustellen. Das gasförmige Medium, das zur Herstellung des Überdruckes bzw. Unterdruckes verwendet wird, kann die den Fertigungsbereich umgebende Luft sein. Grundsätzlich könnte aber auch ein geschlossenes System mit einem anderen komprimierbaren Medium Verwendung finden.

Die wesentliche Anwendung der Erfindung ist allerdings die Verwendung eines pneumatischen Pumpaggregats, das auf leichte und einfache Weise einen Überdruck erzeugen kann und in eine Druckleitung überführt. Diese Druckleitung steht in Strömungsverbindung mit dem pneumatischen Energiespeicher, wobei ein dem Energiespeicher vorgeschaltetes Druckregelventil, das insbesondere mit einer Entlastungsöffnung versehen ist, dafür Sorge trägt, dass der Druck im pneumatischen Energiespeicher weitgehend konstant bleibt.

Von dem pneumatischen Energiespeicher wiederum verläuft eine Druckversorgungsleitung entweder zu einem Übergabepunkt, an dem über eine geeignete Schnittstelle Druckluft oder der Unterdruck abgegriffen werden kann, oder unmittelbar zu einem oder mehreren pneumatischen Verbrauchern. Pneumatische Verbraucher können in diesem Zusammenhang alle Mittel sein, die über einen Unterdruck oder über Druckluft betrieben werden können. Dies können beispielsweise Greifer, Ausstoßer, Saugglocken oder sonstige Mittel zum Steuern des Materialflusses oder einer Funktion der Maschine sein. Auch zu reinen Reinigungszwecken, beispielsweise zum Ausblasen der Formmulde der Pressvorrichtung oder zum Reinigen des Weges, den das Werkstück nach der Bearbeitung zurücklegt, kann ein erzeugter Überdruck genutzt werden.

In der Druckleitung sind geeignete Ventile vorgesehen, die dafür Sorge tragen, dass im Falle eines als Kompressor verwendeten Pumpaggregats der Überdruck in Richtung des pneumatischen Energiespeichers weitergeleitet wird, während im Ansaugbetrieb des Kompressors das Ventil schließt und beispielsweise Umgebungsluft angesaugt wird. Diese Ansaugöffnung für die Umgebungsluft wiederum kann ebenfalls durch ein Ventil verschlossen sein, das selbsttätig bei Auftreten von Überdruck in der Druckleitung schließt und bei auftretendem Saugdruck öffnet. Sofern das Pumpaggregat ein Saugaggregat ist, werden diese Ventile natürlich genau in umgekehrter Richtung arbeiten.

Eine bevorzugte Ausgestaltung der Erfindung verwendet als Pumpaggregat eine Kolben-/Zylindereinheit. Diese kann beispielsweise einen Kolben aufweisen, der unmittelbar oder über Hilfsmittel mittelbar mit dem Pressstempel der Pressvorrichtung verbunden ist. Auf diese Weise wird der Kolben synchron und alternierend mit dem Pressstempel bewegt. Sofern die Laufwege des Pressstempels und des Kolbens unterschiedlich sind, kann hier ein Getriebe zum Einsatz kommen, das diesem Umstand Rechnung trägt.

Bei einer möglichen Ausgestaltung der Erfindung kann auch eine Hubstange des Presswerkzeugs selbst den Zylinder der Kolben-/Zylindereinheit bilden. In diesem Fall wird der Zylinder alternierend bewegt sein, so dass der Kolben zum Beispiel durch Befestigung an einem feststehenden Bauteil der Pressvorrichtung festgelegt ist und sich dann die notwendige Verkleinerung bzw. Vergrößerung des Arbeitsraumes ober- oder unterhalb des Kolbens durch die Zylinderbewegung ergibt. Im Falle einer separaten Kolben-/Zylindereinheit wird dagegen eher der Kolben bewegt sein.

Grundsätzlich weist eine erste Möglichkeit zur Ausgestaltung der Erfindung einen Druckleitungskreis auf. Dieser kann von einer oder auch von mehreren Pumpaggregaten gespeist sein. Mehrere Pumpaggregate bieten sich insbesondere dann an, wenn die Pressvorrichtung mehrere einzelne Hubstangen aufweist. Es wäre aber auch möglich, um eine einzelne Hubstange herum mehrere Pumpaggregate anzuordnen. Weiter weist der Druckleitungskreis die Druckleitung sowie die notwendigen Ventile, das Druckregelventil, den pneumatischen Energiespeicher sowie die Druckversorgungsleitung mit den notwendigen Anschlüssen und Schnittstellen auf. Welche konkreten Schnittstellen und Bauteile verwendet werden, hängt im Wesentlichen vom Bedarf des Anwenders ab.

Eine weitere Ausgestaltung der Erfindung kann auch zwei oder mehr Druckleitungskreise aufweisen. So kann zum Beispiel ein erster Druckleitungskreis zum Erzeugen eines Überdrucks verwendet werden, während ein weiterer Druckleitungskreis zum Erzeugen eines Unterdrucks verwendet wird. Auch unterschiedliche Überdrücke können so erzeugt werden. In diesen Fällen wird für jeden Druckleitungskreis ein separater pneumatischer Energiespeicher vorgesehen sein.

Eine andere Ausgestaltung der Erfindung, die auch in Verbindung mit der oben beschriebenen Erzeugung unterschiedlicher Druckwerte verwendet werden kann, beschickt einen pneumatischen Energiespeicher mit mehreren Pumpaggregaten. So kann zum Beispiel durch ein geeignetes Getriebe eines von zwei Pumpaggregaten zeitversetzt zu dem anderen Pumpaggregat laufen. Durch die sich dann überlagernden, sinusförmig verlaufenden Druckbeschickungen, kann eine Harmonisierung der Funktion erzielt werden.

Eine weitere vorteilhafte Ausgestaltung der Erfindung schließlich nutzt ein Pumpaggregat um zwei Druckleitungen zu beschicken. Bei dieser Ausgestaltung wird oberhalb des Kolbens der Kolben-/Zylindereinheit ein erster Arbeitsraum genutzt, während der Bereich unterhalb dieses Kolbens als zweiter Arbeitsraum eingesetzt wird. Jeder Arbeitsraum ist jeweils mit einer anderen Druckleitung verbunden. Dies hat zwar den Nachteil, dass die durch die Pumpwirkung erzeugte Gegenkraft von der Presskraft der Pressvorrichtung bereitgestellt werden muss, was aber bei vielen Anwendungen tolerabel ist. Der Vorteil dagegen liegt darin, dass ein einzelner Zylinder genutzt werden kann, um zwei Pumpaggregate zu realisieren.

Die Kombination von zwei Pumpaggregaten in einem Zylinder kann, wie auch die Verwendung von unabhängigen Pumpaggregaten, genutzt werden, um entweder eine gemeinsame Druckleitung oder zwei pneumatische Energiespeicher zu beschicken. Je nach Ausgestaltung der Druckkreisläufe könnte theoretisch eine solche Funktion auch alternativ angeboten werden, hierzu müssten entsprechende Verbindungen der Druckleitungen und die notwendigen Ventile vorgesehen werden.

Weitere Merkmale und Vorteile der Erfindung ergeben sich aus der nachfolgenden Beschreibung einen beispielhaften Ausführungsbeispiels einer exemplarischen Pressvorrichtung anhand der Zeichnungen.

In den Zeichnungen zeigt:
- Fig. 1: eine schematische Ansicht einer ersten Ausgestaltung der Pressvorrichtung und
- Fig. 2: eine schematische Ansicht einer zweiten Ausgestaltung der Pressvorrichtung.

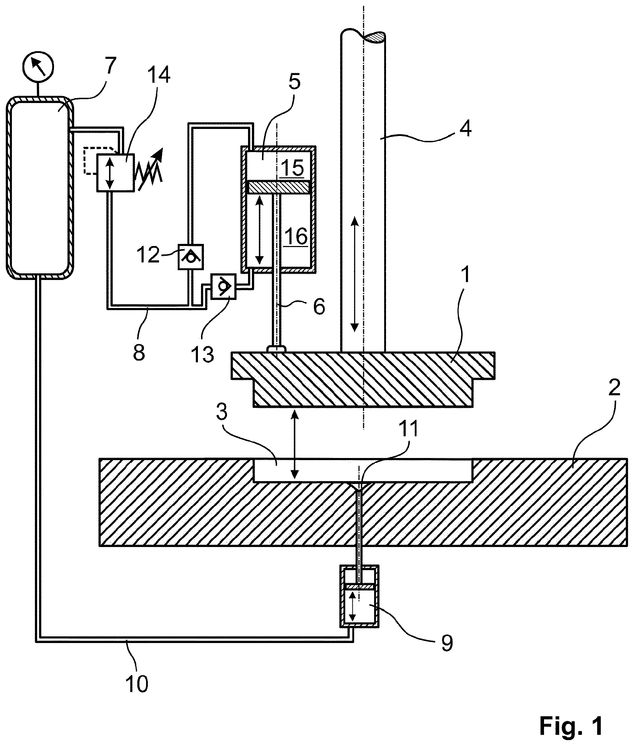

In Figur 1 ist in schematischer Ansicht eine erste mögliche Ausgestaltung der Pressvorrichtung dargestellt. Diese Pressvorrichtung weist eine Hubstange 4 auf, an der im unteren Bereich der Pressstempel 1 vorgesehen ist. Der Pressstempel 1 wird gegen eine Widerlagerfläche 2 angestellt, in der hier eine Formmulde 3 zum Formen eines nicht dargestellten Werkstücks angeordnet ist.

Bei der gezeigten Ausgestaltung ist unterhalb der Widerlagerfläche 2 ein pneumatischer Verbraucher 9 in Form eines Ausstoßdorns 11 vorgesehen. Um diesen auch ohne separaten Druckluftanschluss betreiben zu können, ist die Maschine autark ausgebildet und weist hierzu eine eigene Drucklufterzeugung auf. Die Druckluft wird von dem Pumpaggregat 5, das hier als Kolben-/Zylindereinheit ausgebildet ist, erzeugt.

Die Kolben-/Zylindereinheit weist einen feststehenden Zylinder auf, in dem ein beweglicher Kolben hin- und her bewegt ist, wobei der Kolben sich mit dem unteren Ende seiner Kolbenstange, die das Pumporgan 6 bildet, auf der Oberfläche des Pressstempels 1 abstützt. Durch diese Verbindung mit dem Pressstempel 1 wird der Kolben sowohl hochgedrückt als auch heruntergezogen und bewegt sich somit synchron mit dem Pressstempel 1. Die dargestellte Verbindung und Geometrie sind natürlich nur schematisch zu verstehen, hier können alle anderen Arten von Verbindungen verwendet werden.

Die Kolben-/Zylindereinheit weist sowohl oberhalb des Kolbenbodens einen ersten Arbeitsraum 15 als auch unterhalb des Kolbenbodens einen zweiten Arbeitsraum 16 auf. Nicht dargestellt ist hier die Ansaugmöglichkeit für Umgebungsluft, die über ein Eintrittsventil erfolgt.

Von dem Pumpaggregat 5 erstrecken sich hier Druckleitungen 8 zum pneumatischen Energiespeicher 7. Zur Vermeidung von größeren Druckschwankungen im pneumatischen Energiespeicher 7 ist ein Druckregelventil 14 unmittelbar vor dem pneumatischen Energiespeicher 7 in der Druckleitung 8 vorgesehen. Druckventile 12, 13 regeln die Funktion derart, dass im Falle eines Überdrucks im Arbeitsraum 15, 16 des Pumpaggregates 5 dieser Überdruck an dem pneumatischen Energiespeicher 7 weitergeleitet wird, während im Falle eines Unterdrucks durch die entgegengesetzte Bewegung des Kolbens das jeweilige Druckventil 12, 13 schließt und so ein Zurücksaugen der Luft vermeidet.

Der pneumatische Energiespeicher 7 wiederum ist über eine Druckversorgungsleitung 10 im gezeigten Ausführungsbeispiel mit dem pneumatischen Verbraucher 9 verbunden. Dieser pneumatische Verbraucher 9 ist ebenfalls eine Kolben-/Zylindereinheit, die den Überdruck in der Druckversorgungsleitung 10 zum Bewegen des Ausstoßdorns 11 nutzt. Die Rückstellung dieses Dorns kann zum Beispiel federgetrieben sein. Nicht dargestellt sind die in der Druckversorgungsleitung 10 oder im pneumatischen Verbraucher 9 vorhandenen Ventile und Stellmittel, um die geschilderte Funktion zu realisieren.

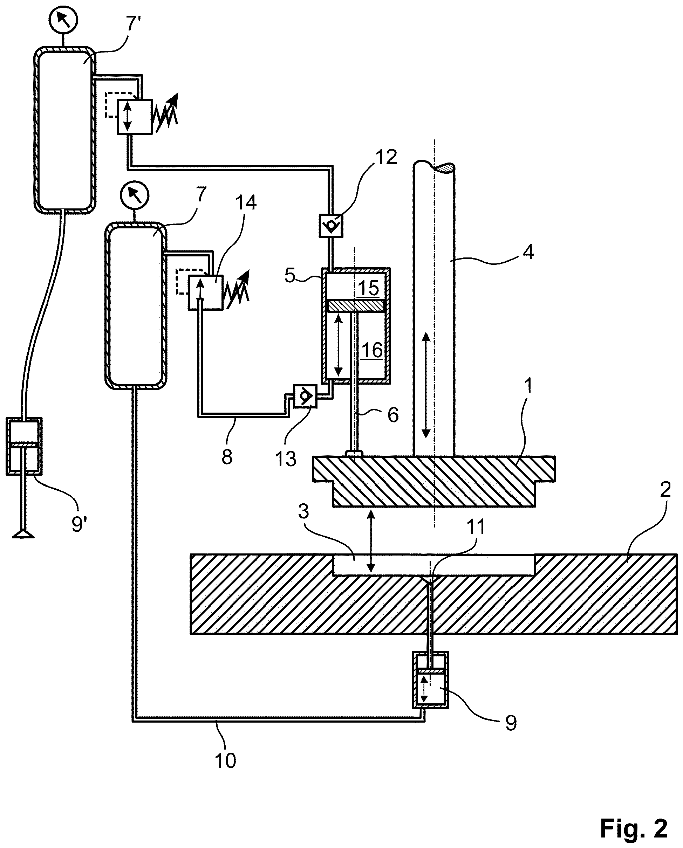

In Figur 2 ist eine weitere Ausgestaltung der Erfindung dargestellt. Hier ist ein zweiter pneumatischer Energiespeicher 7' vorgesehen, wobei das Pumpaggregat 5 hier ebenfalls zwei Arbeitsräume 15, 16 aufweist. Im Gegensatz zu der in Figur 1 dargestellten Ausgestaltung der Erfindung sind hier allerdings die beiden Arbeitsräume 15, 16 an unterschiedliche Druckleitungskreise angeschlossen. Über die Druckleitung 8 ist der untere Arbeitsraum 16 mit dem pneumatischen Energiespeicher 7 verbunden, der auch hier ein Druckregelventil 14 aufweist. Insoweit unterscheidet sich diese Funktion nicht von der in Figur 1 dargestellten Funktion.

Der obere Arbeitsraum 15 dagegen wirkt mit einem anderen Druckleitungskreis zusammen, der mit dem zweiten pneumatischen Energiespeicher 7' verbunden ist, wobei auch hier ein Druckregelventil 14 Verwendung findet. Das Druckventil 12 ist hier zur Bildung einer Unterdruckpumpe vorgesehen, so dass der Kolben, der beim Herunterfahren einen Unterdruck im zweiten Arbeitsraum 15 erzeugt, die Luft aus der Druckleitung 8 dieses zweiten Druckleitungskreis heraussaugt. Fährt der Kolben nun wieder herauf, wird die Luft im Kolben nach Schließen des Druckventils 12 über eine hier nicht dargestellte Ausstoßöffnung, die über ein zum Druckventil 12 gegensinnig nicht arbeitendes Ventil geschlossen ist, ausgestoßen. Natürlich könnte diese Ausstoßöffnung auch wiederum mit dem ersten Druckleitungskreis verbunden sein, so dass der gleiche Arbeitsraum 15 zum einen als Saugkammer und zum anderen als überdruckerzeugende Kammer genutzt werden kann. Dies gilt natürlich auch auf der gegenüberliegenden Seite des Kolbenbodens im Bereich des dort angeordneten Arbeitsraumes 16.

Als Beispiel wird hier der zweite pneumatische Energiespeicher 7' mit einem Saugmittel zusammen, dass als Greifer als pneumatischer Verbraucher 9' für das Werkstück verwendet werden kann und zum Beispiel über einen roboterartigen Arm verfahren werden kann. Die Ausgestaltung des ersten Druckleitungskreis und seine Verbindung zum ersten pneumatischen Verbraucher 9 unterscheiden sich nicht von der in Verbindung mit Figur 1 geschilderten Variante.

### Bezugszeichenliste:

- 1: Pressstempel
- 2: Widerlagerfläche
- 3: Formmulde
- 4: Hubstange
- 5: Pumpaggregat
- 6: Pumporgan
- 7, 7`: Pneumatischer Energiespeicher
- 8: Druckleitung
- 9, 9': Pneumatischer Verbraucher
- 10: Druckversorgungsleitung
- 11: Ausstoßdorn
- 12: Druckventil
- 13: Druckventil
- 14: Druckregelventil
- 15: Arbeitsraum
- 16: Arbeitsraum

## Patentansprüche

1. Werkzeugmaschine zum Herstellen, Ver- oder Bearbeiten eines Werkstücks mit
• zumindest einem Werkzeug, das bei der Ver- oder Bearbeitung des Werkstücks relativ zum Werkstück bewegt ist,
• wenigstens einem Druckleitungskreis, der zumindest ein Pumpaggregat (5) und zumindest einen, mit dem Pumpaggregat (5) über eine Druckleitung (8) in Strömungsverbindung stehenden Energiespeicher (7) aufweist, an dem eine in dem Energiespeicher (7) vorhandene Druckdifferenz zum Umgebungsdruck über eine Druckversorgungsleitung (10) abgreifbar ist,
wobei das Pumpaggregat (5) wenigstens ein mechanisch angetriebenes Pumporgan (6) zum An- oder Absaugen eines Mediums aufweist und in Strömungsverbindung mit der Druckleitung (8) steht und wobei die Druckluft von dem Pumpaggregat (5) erzeugt ist, wobei das Pumporgan (6) hierzu unmittelbar oder mittelbar mit einem, bei bestimmungsgemäßen Betrieb der Werkzeugmaschine mitbewegten Bauteil der Werkzeugmaschine mechanisch gekoppelt ist, so dass das von der Werkzeugmaschine bewegte Bauteil das Pumporgan (6) antreibt, **dadurch gekennzeichnet, dass**
die Werkzeugmaschine eine eigene Drucklufterzeugung zum Betreiben pneumatischer Verbraucher ohne separaten Druckluftanschluss aufweist, wobei das Pumpaggregat (5) ein Kompressor zum Aufbau eines pneumatischen Überdrucks ist, der gasförmiges Medium anzusaugen und in komprimiertem Zustand in die Druckleitung (8) zu pressen vermag, und der als pneumatischer Druckspeicher ausgebildete Energiespeicher (7) ein Druckbehälter mit gegenüber dem Umgebungsdruck erhöhtem Innendruck ist und wobei von dem Energiespeicher (7) eine Druckversorgungsleitung zu einem Übergabepunkt verläuft, an dem über eine geeignete Schnittstelle Druckluft oder Unterdruck abgreifbar ist.

2. Werkzeugmaschine nach Anspruch 1, **dadurch gekennzeichnet, dass** die Werkzeugmaschine als Pressvorrichtung ausgebildet ist und zwei separate Druckleitungskreise mit jeweils zumindest einem Energiespeicher (7) und einer Druckleitung (8) aufweist, wobei einer der Druckleitungskreise der überdruckführende Druckleitungskreis mit dem Kompressor als Pumpaggregat (5) und einer der Druckleitungskreise als unterdruckführender Druckleitungskreis mit einem Saugaggregat als Pumpaggregat (5) ausgebildet ist, das gasförmiges Medium aus der Druckleitung (8) abzusaugen vermag, wobei der zugeordnete pneumatische Energiespeicher (7') ein Druckbehälter mit gegenüber dem Umgebungsdruck abgesenktem Innendruck ist.

3. Werkzeugmaschine nach dem vorhergehenden Anspruch, **dadurch gekennzeichnet, dass** das von der Pressvorrichtung bewegte Bauteil während der Bearbeitung des Werkstücks in einer reziproken Hubbewegung bewegt ist und die Pressvorrichtung wenigstens eine Widerlagerfläche (2), zumindest einen, in einer Hubbewegung gegen die Widerlagerfläche (2) anstellbaren Pressstempel (1) aufweist, wobei das bewegte Bauteil der Pressstempel (1) oder ein mit dem Pressstempel (1) verbundenes Bauteil der Pressvorrichtung, insbesondere eine Hubstange (4) des Pressstempels (1), ist.

4. Werkzeugmaschine nach Anspruch 1 oder nach Anspruch 2, **dadurch gekennzeichnet, dass** das von der Pressvorrichtung bewegte Bauteil während der Bearbeitung des Werkstücks in einer Rotationsbewegung bewegt ist, wobei das das Pumpaggregat (5) ein in einer reziproken Hubbewegung bewegtes Pumporgan (6) aufweist, das über ein Getriebe zur Umwandlung der Drehbewegung in eine translatorische Hin- und Herbewegung von dem, von der Pressvorrichtung bewegten Bauteil angetrieben ist.

5. Werkzeugmaschine nach Anspruch 3, **dadurch gekennzeichnet, dass** das Pumpaggregat (5) eine Kolben-/Zylindereinheit ist, wobei das Pumpaggregat (5) der mit der Hubbewegung des bewegten Bauteils der Pressvorrichtung gekoppelte Kolben der Kolben-/Zylindereinheit ist und die Kolben-/Zylindereinheit einen auf einer Seite des Kolbens angeordneten Arbeitsraum (15,16) aufweist, der mit der, ein Druckventil (12,13) aufweisenden Druckleitung (8) in Strömungsverbindung steht, wobei das Druckventil (12,13) des als Kompressor ausgebildeten Pumpaggregats (5) eine Strömung von der Kolben-/Zylindereinheit zum pneumatischen Energiespeicher (7) zulässt und in die entgegengesetzte Richtung selbsttätig zu blockieren vermag und im Falle des als Saugaggregat ausgebildeten Pumpaggregats (5) eine Strömung von dem pneumatischen Energiespeicher (7) zu der Kolben-/Zylindereinheit zulässt und in die entgegengesetzte Richtung selbsttätig zu blockieren vermag.

6. Werkzeugmaschine nach Anspruch 5, **dadurch gekennzeichnet, dass** die Kolben-/Zylindereinheit auf beiden Seiten des Kolbens jeweils einen Arbeitsraum (15,16) aufweist, wobei einer der Arbeitsräume (15) mit einem ersten, unter- oder überdruckführenden Druckleitungskreis und ein zweiter, auf der gegenüberliegenden Seite des Kolbens angeordneter Arbeitsraum (16) mit einem zweiten, über- oder unterdruckführenden Druckleitungskreis in Strömungsverbindung steht.

7. Werkzeugmaschine nach einem der vorhergehenden Ansprüche, **dadurch gekennzeichnet, dass** die Werkzeugmaschine wenigstens einen pneumatisch beaufschlagten Verbraucher (9, 9`) aufweist, der über eine, ein steuerbares Stellventil aufweisende Druckversorgungsleitung (10) mit dem Energiespeicher (7) in Strömungsverbindung steht.

8. Werkzeugmaschine nach dem vorhergehenden Anspruch, **dadurch gekennzeichnet, dass** der pneumatisch beaufschlagte Verbraucher (9) ein überdruckgetriebener Ausstoßdorn (11) oder ein unterdruckgetriebener Saugnapf als Teil eines Werkstückhandlings ist.

9. Werkzeugmaschine nach Anspruch 3, **dadurch gekennzeichnet, dass** die Hubstange (4) zumindest abschnittweise hohlzylindrisch ausgebildet ist und den Zylinder der Kolben-/Zylindereinheit bildet.

## Claims

1. Machine tool for the manufacture, processing or machining of a workpiece with
• at least one tool which is moved relative to the workpiece during the processing or machining of the workpiece,
• at least one pressure line circuit comprising at least one pump unit (5) and at least one energy reservoir (7) which is in flow connection with the pump unit (5) via a pressure line (8) and at which a pressure difference to the ambient pressure present in the energy reservoir (7) can be tapped via a pressure supply line (10),
wherein the pump unit (5) comprises at least one mechanically driven pump member (6) for sucking in or drawing off a medium and is in flow connection with the pressure line (8) and wherein the compressed air is generated by the pump unit (5), wherein the pump member (6) is mechanically coupled for this purpose directly or indirectly to a structural member of the machine tool which is moved with the machine tool during intended operation of the machine tool, so that the structural member moved by the machine tool drives the pump member (6), **characterized in that**
the machine tool comprises its own compressed air generation for operating pneumatic consumers without a separate compressed air connection, wherein the pump unit (5) is a compressor for building up a pneumatic overpressure which is capable of drawing in gaseous medium and forcing it into the pressure line (8) in a compressed state, and the energy reservoir (7) embodied as a pneumatic pressure accumulator is a pressure vessel with an increased internal pressure compared to the ambient pressure, and wherein a pressure supply line extends from the energy reservoir (7) to a transfer point at which compressed air or negative pressure can be tapped via a suitable interface.

2. Machine tool according to claim 1, **characterized in that** the machine tool is embodied as a pressing device and comprises two separate pressure line circuits with respectively at least one energy reservoir (7) and one pressure line (8), wherein one of the pressure line circuits is embodied as the overpressure-carrying pressure line circuit with the compressor as pump unit (5) and one of the pressure line circuits is embodied as a vacuum-carrying pressure line circuit with a suction unit as pump unit (5), which is capable of sucking gaseous medium out of the pressure line (8), wherein the associated pneumatic energy reservoir (7') is a pressure vessel with an internal pressure which is lower than the ambient pressure.

3. Machine tool according to the preceding claim, **characterized in that** the structural member moved by the pressing device is moved in a reciprocating stroke movement during the machining of the workpiece and the pressing device has at least one abutment surface (2), at least one press plunger (1) which can be adjusted in a stroke movement against the abutment surface (2), the moved structural member being the press plunger (1) or a press plunger (1) connected to the press plunger (1), at least one press plunger (1) which can be set in a reciprocating movement against the abutment surface (2), wherein the moving component is the press plunger (1) or a structural member of the pressing device connected to the press plunger (1), in particular a lifting rod (4) of the press plunger (1).

4. Machine tool according to claim 1 or according to claim 2, **characterized in that** the structural member moved by the pressing device is moved in a rotational movement during the machining of the workpiece, the pump unit (5) comprising a pump member (6) which is moved in a reciprocating stroke movement and which is driven by the structural member moved by the pressing device via a gear for converting the rotational movement into a translatory reciprocating movement.

5. Machine tool according to claim 3, **characterized in that** the pump unit (5) is a piston/cylinder unit, the pump unit (5) being the piston of the piston/cylinder unit which is coupled to the stroke movement of the moving structural member of the pressing device, and the piston/cylinder unit comprising a working chamber (15, 16) which is arranged on one side of the piston and is in flow connection with the pressure line (8) having a pressure valve (12, 13), wherein the pressure valve (12, 13) of the pump unit (5) embodied as a compressor permits a flow from the piston/cylinder unit to the pneumatic energy reservoir (7) and is capable of automatically blocking in the opposite direction and, in the case of the pump unit (5) embodied as a suction unit, permits a flow from the pneumatic energy reservoir (7) to the piston/cylinder unit and is capable of automatically blocking in the opposite direction.

6. Machine tool according to claim 5, **characterized in that** the piston/cylinder unit comprises a working chamber (15, 16) respectively on both sides of the piston, one of the working chambers (15) being in flow connection with a first pressure line circuit carrying negative or positive pressure and a second working chamber (16) arranged on the opposite side of the piston being in flow connection with a second pressure line circuit carrying positive or negative pressure.

7. Machine tool according to one of the preceding claims, **characterized in that** the machine tool comprises at least one pneumatically pressurized consumer (9, 9') which is in flow connection with the energy reservoir (7) via a pressure supply line (10) having a controllable control valve.

8. Machine tool according to the preceding claim, **characterized in that** the pneumatically actuated consumer (9) is an overpressure-driven ejector mandrel (11) or a vacuum-driven suction cup as part of a workpiece handling system.

9. Machine tool according to claim 3, **characterized in that** the lifting rod (4) is embodied hollow-cylindrical at least in sections and constitutes the cylinder of the piston/cylinder unit.

## Revendications

1. Machine-outil pour la fabrication, l'usinage ou le traitement d'une pièce à usiner comprenant
• au moins un outil qui est déplacé par rapport à la pièce à usiner lors de l'usinage ou du traitement de la pièce à usiner,
• au moins un circuit de conduites de pression qui comprend au moins un groupe de pompage (5) et au moins un le réservoir d'énergie (7) qui est en liaison d'écoulement avec le groupe de pompage (5) par l'intermédiaire d'une conduite de pression (8) et sur lequel une différence de pression présente dans le réservoir d'énergie (7) par rapport à la pression ambiante peut être prélevée par l'intermédiaire d'une conduite d'alimentation en pression (10),
le groupe de pompage (5) comprenant au moins un organe de pompage (6) entra né mécaniquement pour l'aspiration ou l'évacuation d'un fluide et étant en liaison d'écoulement avec la conduite de pression (8) et l'air comprimé étant produit par le groupe de pompage (5), l'organe de pompage (6) étant à cet effet couplé mécaniquement directement ou indirectement à un composant de la machine-outil qui est entra né lors du fonctionnement conforme de la machine-outil, de sorte que le composant déplacé par la machine-outil entra ne l'organe de pompage (6), **caractérisé en ce que**
la machine-outil comprend sa propre production d'air comprimé pour faire fonctionner des consommateurs pneumatiques sans raccordement séparé à l'air comprimé, le groupe de pompage (5) étant un compresseur pour établir une surpression pneumatique qui peut aspirer un milieu gazeux et le presser à l'état comprimé dans la conduite de pression (8), et le réservoir d'énergie (7) conçu comme un accumulateur de pression pneumatique est un réservoir sous pression dont la pression interne est supérieure à la pression ambiante, et une conduite d'alimentation en pression s'étend du réservoir d'énergie (7) jusqu'à un point de transfert où de l'air comprimé ou une dépression peut être prélevé par l'intermédiaire d'une interface appropriée.

2. Machine-outil selon la revendication 1, **caractérisée en ce que** la machine-outil est conçue comme un dispositif de pressage et comprend deux circuits de pression séparés comprenant chacun au moins un réservoir d'énergie (7) et un dispositif de pression (8), l'un des circuits de conduite de pression étant conçu comme le circuit de conduite de pression conduisant à la surpression avec le compresseur comme agrégat de pompage (5) et l'un des circuits de conduite de pression étant conçu comme le circuit de conduite de pression conduisant à la dépression avec un agrégat d'aspiration comme agrégat de pompage (5), qui peut aspirer le milieu gazeux de la conduite de pression (8), le réservoir d'énergie pneumatique (7') associé étant un réservoir sous pression avec une pression intérieure abaissée par rapport à la pression ambiante.

3. Machine-outil selon la revendication précédente, **caractérisée en ce que** le composant déplacé par le dispositif de pressage est déplacé dans un mouvement de course réciproque pendant l'usinage de la pièce à usiner et **en ce que** le dispositif de pressage comprend au moins une surface de butée (2), au moins un poinçon de pressage (3) et au moins un outil de pressage (4), comprend un poinçon de pressage (1) pouvant être appliqué contre la surface de butée (2) dans un mouvement de course, la pièce déplacée étant le poinçon de pressage (1) ou une pièce du dispositif de pressage reliée au poinçon de pressage (1), en particulier une tige de levage (4) du poinçon de pressage (1).

4. Machine-outil selon la revendication 1 ou selon la revendication 2, **caractérisée en ce que** le composant déplacé par le dispositif de pressage est déplacé dans un mouvement de rotation pendant l'usinage de la pièce, le groupe de pompage (5) comprenant un organe de pompage (6) déplacé dans un mouvement de course réciproque, qui est entraîné par le composant déplacé par le dispositif de pressage par l'intermédiaire d'un engrenage pour transformer le mouvement de rotation en un mouvement de translation en va-et-vient.

5. Machine-outil selon la revendication 3, **caractérisée en ce que** l'unité de pompage (5) est une unité piston/cylindre, l'unité de pompage (5) étant le piston de l'unité piston/cylindre qui est couplé au mouvement de levage de la pièce déplacée du dispositif de pressage, et l'unité piston/cylindre comprenant un espace de travail (15, 16) disposé sur une face du piston, qui est en liaison d'écoulement avec la conduite de pression (8) présentant une soupape de pression (12, 13), La soupape de refoulement (12, 13) de l'agrégat de pompage (5) conçu comme un compresseur permet un écoulement de l'unité de piston/cylindre vers le réservoir d'énergie pneumatique (7) et peut se bloquer automatiquement dans la direction opposée et, dans le cas de l'agrégat de pompage (5) conçu comme un agrégat d'aspiration, permet un écoulement du réservoir d'énergie pneumatique (7) vers l'unité de piston/cylindre et peut se bloquer automatiquement dans la direction opposée.

6. Machine-outil selon la revendication 5, **caractérisée en ce que** l'ensemble piston/cylindre comprend de part et d'autre du piston une chambre de travail (15, 16), l'une des chambres de travail (15) étant en communication fluidique avec un premier circuit de conduite de pression en dépression ou en surpression et une deuxième chambre de travail (16) disposée sur la face opposée du piston étant en communication fluidique avec un deuxième circuit de conduite de pression en surpression ou en dépression.

7. Machine-outil selon l'une des revendications précédentes, **caractérisée en ce que** la machine-outil comprend au moins un consommateur (9, 9') à commande pneumatique, qui est en liaison d'écoulement avec le réservoir d'énergie (7) par l'intermédiaire d'une conduite d'alimentation en pression (10) présentant une vanne de réglage commandable.

8. Machine-outil selon la revendication précédente, **caractérisée en ce que** le consommateur (9) alimenté pneumatiquement est un mandrin d'éjection (11) entraîné par surpression ou une ventouse entraînée par dépression faisant partie d'une manipulation de pièces.

9. Machine-outil selon la revendication 3, **caractérisée en ce que** la tige de levage (4) est réalisée au moins par sections en forme de cylindre creux et forme le cylindre de l'unité piston/cylindre.
